Europäisches Patentamt

European Patent Office

Office européen des brevets

(11) Veröffentlichungsnummer: **0 149 416**
A2

## (12) EUROPÄISCHE PATENTANMELDUNG

(21) Anmeldenummer: 84730136.3

(22) Anmeldetag: 06.12.84

(51) Int. Cl.⁴: **G 01 K 7/22**

(30) Priorität: 20.12.83 DE 3346565

(43) Veröffentlichungstag der Anmeldung:
24.07.85 Patentblatt 85/30

(84) Benannte Vertragsstaaten:
AT BE CH DE FR GB IT LI LU NL SE

(71) Anmelder: baby comp - Natürliche Familien-Planung
(NFP) GmbH
Lindenallee 20
D-1000 Berlin 19(DE)

(72) Erfinder: Steinschulte, Werner, Dr. Med.
Lindenallee 20
D-1000 Berlin 19(DE)

(74) Vertreter: Butenschön, Antje, Dr.
Patentanwälte PFENNING, MEINIG & PARTNER
Kurfürstendamm 170
D-1000 Berlin 15(DE)

(54) **Temperaturfühler zur Messung der Temperatur in konvektionsarmen Medien.**

(57) Es wird ein Temperaturfühler zur Messung der Temperatur in konvektionsarmen Medien vorgeschlagen, der einen temperaturabhängigen Widerstand, eine den Widerstand aufnehmende Aufnahmehülse und eine Haltevorrichtung aufweist. Der Widerstand ist dabei durch wärmeleitendes Material abgedeckt. Die Aufnahmehülse ist als langgezogene, dünnwandige rohrartige Hülse aus schlecht wärmeleitendem Material ausgebildet und umschließt eine langgestreckte Luftkammer, durch die die Zuleitungsdrähte zu dem temperaturabhängigen Widerstand hindurchgeführt sind.

Fig.1

EP 0 149 416 A2

## Temperaturfühler zur Messung der Temperatur in konvektionsarmen Medien

Die Erfindung betrifft einen Temperaturfühler zur Messung der Temperatur in konvektionsarmen Medien nach der Gattung des Hauptanspruchs.

Es sind Temperaturfühler bekannt, bei denen ein temperaturabhängiger Widerstand, zum Beispiel ein Thermistor, in eine Stahlhülse eingegossen ist. Diese Stahlhülse ist mit einer Haltevorrichtung verbunden und die Anschlüsse des Widerstandes sind an eine Auswerteschaltung angeschlossen. Zur exakten Messung der Temperatur muß die Stahlhülse und gegebenenfalls auch die Haltevorrichtung die Temperatur des Mediums annehmen, dessen Temperatur ermessen soll. Die dazu erforderliche Wärmeenergie wird dem umgebenden Medium entzogen, das dabei abkühlt, so daß zum Ausgleich Wärme den entfernteren Bereichen des Mediums entzogen werden muß.

0149416

Bei Medien mit starker Konvektion geht dieser Vorgang verhältnismäßig schnell vor sich, so daß mit dem Temperaturfühler entsprechend dem Stand der Technik eine verhältnismäßig schnelle Temperaturmessung erhalten wird. Bei konvektionsarmen oder -freien Medien geht der Temperaturausgleich zwischen Fühler und gesamtem Medium sehr langsam vor sich, so daß eine exakte Temperaturmessung sehr zeitraubend ist. Außerdem spielt bei langen Meßzeiten auch der vorhandene kontinuierliche Wärmeabfluß über die Haltevorrichtung und das Anschlußkabel eine Rolle sowie die Selbsterwärmung des Sensors durch den Meßstrom.

Hier setzt die vorliegende Erfindung ein, der die Aufgabe zugrunde liegt, einen Temperaturfühler zu schaffen, der in konvektionsarmen Medien eine schnelle und genaue Temperaturmessung erlaubt.

Diese Aufgabe wird erfindungsgemäß durch die kennzeichnenden Merkmale des Hauptanspruchs in Verbindung mit den Merkmalen des Oberbegriffs gelöst. Dadurch, daß die Materialien des Fühlers, die sich nicht unmittelbar zwischen Thermistor und zu messendem Medium befinden, als schlechte Wärmeleiter ausgebildet sind, kann die von dem Thermistor und seiner Ummantelung aufgenommene Wärmeenergie nur äußerst schlecht weitergeleitet werden, so daß ein schneller Temperaturausgleich zwischen zu messendem Medium und Thermistor möglich ist. Durch das Vorsehen der Luftkammer, die sich hinter dem Thermistor befindet und von der dünnen, schlecht wärmeleitenden Wand umgeben ist, findet aufgrund der Luftisolation kein Wärmefluß statt.

Durch die in den Unteransprüchen angegebenen
Maßnahmen sind vorteilhafte Weiterbildungen
und Verbesserungen möglich. Dadurch, daß zwischen
Thermistor und Medium nur eine äußerst dünne
Schicht aus sehr gut wärmeleitendem Material
vorhanden ist, findet ein schneller Wärmeausgleich zwischen Medium und Thermistor statt.
Dadurch, daß die Zuleitungen zu dem Thermistor
sehr dünn gehalten sind und mit großer Länge
durch die Luftkammer geführt sind, wird nur
eine sehr kleine Wärmemenge durch die Zuleitungen
abgeführt.

Die Gesamtheit der verschiedenen Maßnahmen
ergeben einen schnellen und genau messenden
Temperaturfühler.

Die Erfindung ist in der Zeichnung dargestellt
und wird in der nachfolgenden Beschreibung
näher erläutert. Es zeigen:

      Fig. 1   einen Schnitt durch den erfindungsgemäßen Temperaturfühler;
                  und
      Fig. 2   einen vergrößerten Ausschnitt
                  des Thermistors in dem einen
                  Ende der Aufnahmehülse.

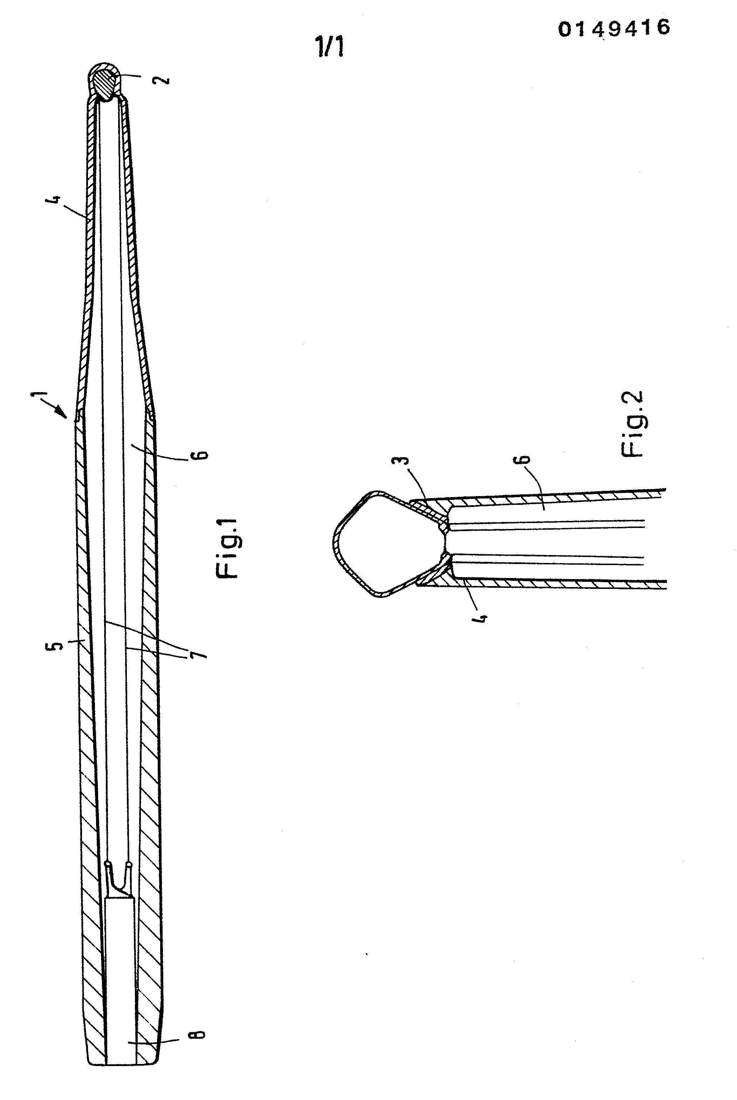

In dem in Fig. 1 dargestellten Temperaturfühler
1 ist als temperaturabhängiger Sensor ein
Thermistor 2 vorgesehen, der eine rundliche bis
tropfenförmige Form aufweist. Der Thermistor 2
ist mit einer gut wärmeleitenden Epoxydharzummantelung, die nicht dargestellt ist, versehen.
Wie aus Fig. 2 zu erkennen ist, ist der Thermistor
2 mit einem gut wärmeleitenden Epoxydharzkleber 3 auf das Ende einer Aufnahmehülse 4 aufgeklebt.

In einem anderen nicht dargestellten Ausführungsbeispiel ist der Thermistor mit gut leitendem,
speziellen Epoxydharz in eine dünne, ihn nur
knapp bedeckende Metallkappe aus Aluminium
oder einer Kupfer- oder Silberlegierung eingegossen und mit dem Ende der Aufnahmehülse 4
verbunden.

Die Aufnahmehülse 4 ist rohrförmig ausgebildet,
wobei ihre Wandung sehr dünn gehalten ist und
aus einem schlecht wärmeleitenden Material
besteht. Die Aufnahmehülse geht in einen Griff
5 über, der ebenfalls aus einem schlecht wärmeleitenden Material, zum Beispiel Polystyrol,
besteht, dessen Wandungen aber etwas dicker
sein können, da er weiter vom Thermistor 2
entfernt ist. Innerhalb der Aufnahmehülse 4
und des Griffes 5 ist eine Luftkammer 6 vorgesehen, wodurch ein Wärmefluß von dem Thermistor
2 zu den anderen Teilen des Temperaturfühlers
weitgehend verhindert wird. Die Zuleitungen 7
zu dem Thermistor 2 sind als dünne Drähte
mit einem Durchmesser von zum Beispiel 0,2 mm
ausgebildet und sind durch die von der Aufnahmehülse 4 und dem Griff 5 umgebene Luftkammer 6
hindurchgeführt und mit einem in den Griff 5
hineinragenden Kabel 8, das zu einem nicht
dargestellten Meßgerät führt, verbunden.
In einem Ausführungsbeispiel weisen die Zuleitungen
7 eine Länge von ungefähr 80 mm auf, wobei die
Maße des Thermistors entsprechend Fig. 2 zum
Beispiel zwischen 1,8 bis 2,4 mm für die Breite
und zwischen 2 mm bis 2,8 mm für die Länge
betragen können.

Bei der Ausführung des Temperaturfühlers ist zu beachten, daß alle Materialien, die direkt zwischen Thermistor 2 und dem zu messenden Medium liegen,sehr gut wärmeleitend sein müssen, damit der erforderliche Wärmetransport zwischen Medium und Sensor möglichst schnell vor sich geht. Die Masse des Thermistors und die Masse des ihn umgebenden sehr gut wärmeleitenden Materials müssen dabei so gering wie möglich sein, um die Wärmekapazität des Teils des Fühlers, das auf die Umgebungstemperatur gebracht werden muß, möglichst gering zu halten, so daß möglichst wenig Wärme der Umgebung entzogen werden muß. Alle Materialien des Fühlers 1, die nicht die unmittelbare Trennschicht zwischen Thermistor 2 und Medium bilden, müssen möglichst schlechte Wärmeleiter sein, damit die möglichst gering zu haltende, unvermeidbare Wärmemenge, die dem Medium entzogen werden muß, nur dem Temperatursensor zur Verfügung steht, und nicht unnötig und unerwünschterweise durch Wärmeabfluß in Richtung Halterung vergrößert wird.

Patentansprüche

1. Temperaturfühler zur Messung der Temperatur
in konvektionsarmen Medien mit einem temperaturabhängigen Sensor, einem mit dem Sensor
verbundenen Aufnahmeteil und einer Haltevorrichtung, wobei der Sensor durch wärmeleitendes Material abgedeckt ist,
d a d u r c h   g e k e n n z e i c h n e t ,
daß eine langgestreckte Luftkammer (6) vorgesehen ist, an deren einem Ende der Sensor
(2) angeordnet ist, dessen Zuleitungsdrähte
(7) durch die Luftkammer hindurchgeführt sind.

2. Temperaturfühler nach Anspruch 1, dadurch
gekennzeichnet, daß das Aufnahmeteil (4)
als langgezogene dünnwandige, rohrartige
Hülse ausgebildet ist, die die Luftkammer (6)
umschließt.

3. Temperaturfühler nach Anspruch 2, dadurch
gekennzeichnet, daß die Wandung des Aufnahmeteils (4) im Bereich von 0,2 mm liegt.

4. Temperaturfühler nach einem der Ansprüche 1
bis 3, dadurch gekennzeichnet, daß das Aufnahmeteil (4) aus schlecht wärmeleitendem
Material besteht.

5. Temperaturfühler nach einem der Ansprüche 1
bis 4, dadurch gekennzeichnet, daß der temperaturabhängige Sensor (2) mit einer dünnen Schicht
aus sehr gut wärmeleitendem Material überzogen ist.

6. Temperaturfühler nach Anspruch 5, dadurch gekennzeichnet, daß die dünne Schicht kleiner als 0,2 mm ist.

7. Temperaturfühler nach Anspruch 5 oder 6, dadurch gekennzeichnet, daß das gut wärmeleitende Material Epoxydharze, mit Metallen dotierte Kunststoffe, Kupferlegierungen oder Aluminium ist.

8. Temperaturfühler nach einem der Ansprüche 1 bis 7, dadurch gekennzeichnet, daß die Haltevorrichtung als ein das eine Ende der Hülse aufnehmender hohler Griff (5) aus schlecht wärmeleitendem Material ausgebildet ist, in dem sich die durch die Hülse (4) gebildete Luftkammer (6) fortsetzt und durch die die Zuleitungsdrähte bis zu einem in dem Griff (5) aufgenommenen Kabel geführt sind.

9. Temperaturfühler nach einem der Ansprüche 1 bis 8, dadurch gekennzeichnet, daß der Sensor (2) in das andere Ende der Hülse (4) mit einem gut wärmeleitenden Kleber (3) eingeklebt ist.

10. Temperaturfühler nach einem der Ansprüche 1 bis 9, dadurch gekennzeichnet, daß die Zuleitungsdrähte (7) einen Durchmesser im Bereich von 0,2 mm aufweisen.

11. Temperaturfühler nach einem der Ansprüche 1 bis 10, dadurch gekennzeichnet, daß der temperaturabhängige Sensor (2) mit einer dünnen vollständigen Ummantelung aus Epoxydharz versehen ist.

12. Temperaturfühler nach einem der Ansprüche 1 bis 10, dadurch gekennzeichnet, daß der temperaturabhängige Sensor in eine dünne, ihn nur knapp bedeckende Metallkappe eingegossen ist.

Fig.1

Fig.2